(19) Europäisches Patentamt
European Patent Office
Office européen des brevets

(11) **EP 0 639 922 B1**

(12) **EUROPÄISCHE PATENTSCHRIFT**

(45) Veröffentlichungstag und Bekanntmachung des Hinweises auf die Patenterteilung:
**22.07.1998   Patentblatt 1998/30**

(51) Int Cl.⁶: **H04N 5/14**, H04N 5/44

(21) Anmeldenummer: **94112471.1**

(22) Anmeldetag: **10.08.1994**

(54) **Schaltung zur Bewegungsdetektion für ein Bildsignal**

Motion detection circuit for picture signal

Circuit de détection de mouvement pour un signal d'image

(84) Benannte Vertragsstaaten:
**AT BE CH DE DK ES FR GB IT LI NL SE**

(30) Priorität: **18.08.1993   DE 4327733**

(43) Veröffentlichungstag der Anmeldung:
**22.02.1995   Patentblatt 1995/08**

(73) Patentinhaber: **GRUNDIG Aktiengesellschaft
90762 Fürth (DE)**

(72) Erfinder: **Valek, Tomas, Grundig E.M.V.,
Elektro-Mechanische
D-90748 Fürth (DE)**

(56) Entgegenhaltungen:
**EP-A- 0 333 069          EP-A- 0 343 728
EP-A- 0 370 500          US-A- 4 651 211
US-A- 4 716 462**

# Beschreibung

Die Erfindung betrifft einen Bewegungsdetektor mit den im Oberbegriff des Anspruchs 1 angegebenen Merkmalen.

Aus der EP-A2-0 339 365 ist ein Verfahren zur Flimmerreduktion bei einem Fernsehempfänger bekannt. Bei diesem Verfahren werden die empfangenen Fernsehsignale halbbildweise in einem Bildspeicher des Fernsehempfängers zwischengespeichert, die Halbbilder einer Signalverarbeitung unterzogen und mit doppelter Vertikalfrequenz nach dem Zeilensprungverfahren wiedergegeben. Dabei werden in ruhenden und langsam bewegten Bildbereichen die vertikalen Höhensignale $A_{0H}$, $B_{oH}$ der beiden Halbbilder in einer flimmerfreien 100 Hz-Halbbildwiedergabefolge $A_{0H}$, $B_{0H}$, $A_{0H}$, $B_{0H}$ und die vertikalen Tiefensignale $A_{0T}$, $B_{0T}$ mit den interpolierten vertikalen Tiefensignalen $A_{0Ti}$, $B_{0Ti}$ der beiden Halbbilder in einer bewegungsrichtigen 100 Hz-Halbbildwiedergabefolge $A_{0T}$, $A_{0Ti}$, $B_{0Ti}$, $B_{0T}$ wiedergegeben. In rasch bewegten Bildbereichen erfolgt eine Wiedergabe der beiden Halbbilder $A_0$, $B_0$ und der interpolierten Halbbilder $A_{0i}$, $B_{0i}$ in einer bewegungsrichtigen 100 Hz-Halbbildwiedergabefolge $A_0$, $A_{0i}$, $B_{0i}$, $B_0$. Alternativ dazu ist es - wie in Figur 6 der EP-A2-0 339 365 angegeben - auch möglich, in ruhenden und langsam bewegten Bildbereichen die nach Maßgabe der Ortsfrequenz vertikalen Höhensignale zeilenflimmerfrei wiederzugeben und für die Tiefensignale eine Signalverarbeitung mit Gewichtung und zeitlicher Interpolation vorzunehmen. Der Entgegenhaltung liegt die Erkenntnis zugrunde, daß Zeilenflimmereffekte vorwiegend durch vertikale Höhensignale beeinflußt werden. Durch die Vertikalfilterung und die unterschiedliche Verarbeitung der vertikalen Höhensignale und der vertikalen Tiefensignale wird erreicht, daß die vertikalen Höhensignale zeilenflimmerfrei und die vertikalen Tiefensignale bewegungsrichtig wiedergegeben werden. Bei einem derartigen Vorgehen wird erst bei rasch bewegten Bildbereichen ein Übergang auf eine bewegungsrichtige Teilbildwiedergabefolge notwendig. Der Übergang zwischen den beiden Betriebsarten erfolgt unter Steuerung durch einen Bewegungsdetektor, der in der EP-A2-0 339 365 nicht näher beschrieben ist.

Weiterhin ist aus der EP-A2-0 370 500 eine Schaltungsanordnung zur Umsteuerung zwischen verschiedenen Flimmerreduktionsverfahren in einem Fernsehempfänger bekannt, bei der überprüft wird, ob erstes und zweites Halbbild einer Bildfolge die gleichen Bewegungsphasen aufweisen oder nicht. Sind die Bewegungsphasen gleich, dann wird darauf geschlossen, daß die Bildfolge aus einer Filmproduktion abgeleitet wurde, und für die Dauer mindestens eines Halbbildes auf das hochauflösende Flimmerreduktionsverfahren umgeschaltet. Die bekannte Anordnung weist einen Bewegungsphasendetektor auf, in welchem in einer Subtrahierschaltung bildpunktweise die Differenz aus aufeinanderfolgenden Halbbildern ermittelt, das erhaltene Differenzsignal vertikal und ggfs. horizontal gefiltert, das gefilterte Signal nichtlinear gewichtet, das gewichtete Signal aufintegriert und in einem Komparator mit einem vorgegebenen Schwellenwert verglichen wird. Am Ausgang des Komparators steht pro Halbbild ein Bit zur Verfügung, welches angibt, ob das jeweilige Halbbild aus einer Filmproduktion abgeleitet ist oder nicht.

Aus DE-A-3637017 ist ein Bewegungsdetektor zum Feststellen von Bildbewegungen in einem Videosignal bekannt, bei welchem zur Festellung, ob bezüglich eines Bildpunktes Bewegung vorliegt oder nicht, eine blockweise Auswertung unter Berücksichtigung der Polarität der BildpunktDifferenzsignale erfolgt.

Aus US-A-A651211 ist ein Bewegungsdektor zur Detektion von Zwischenbildbewegungen bekannt, wobei eine Analyse der Chrominanz- und Luminanz-Komponenten der Bildbewegung erfolgt. Die Zwischenbildbewegungen, die durch die Chrominanz- und Luminanz-Komponenten repräsentiert werden, werden dabei aus den Zwischenbild-Signaldifferenzen abgeleitet, wobei die Zwischenbild-Signaldifferenzen nach Hoch- und Niederfrequenz getrennt werden.

Aus EP-A-0343728 ist eine Einrichtung zur Bewegungsdetektion nach einer Bildumwandlung eines Filmformats auf ein Fernsehformat bekannt. Die Bewegungsdetektion basiert auf einem Vergleich von Bildsignalwerten der fortlaufenden Fernsehbilder. Zur Vermeidung von aufgrund der Formatkonversion auftretenden Störungen wird dabei ein Bildelement des Fernsehsignals mit einer Reihe von umgebenden Bildelementen eines zweiten Feldes verglichen.

Der Erfindung liegt die Aufgabe zugrunde, einen Bewegungsdetektor mit den im Oberbegriff des Anspruchs 1 angegebenen Merkmalen derart weiterzubilden, daß die Auswertesicherheit verbessert ist.

Diese Aufgabe wird bei einem Bewegungsdetektor mit den im Oberbegriff des Anspruchs 1 angegebenen Merkmalen durch die im kennzeichnenden Teil des Anspruchs 1 angegebenen Merkmale gelöst.

Vorteilhafte Weiterbildungen ergeben sich aus den abhängigen Patentansprüchen.

Die Vorteile der Erfindung bestehen insbesondere darin, daß aufgrund der Blockbildung der Einfluß einzelner Rauschspitzen verringert und durch die Auswertung der Vorzeichen eine Mißdeutung hoher vertikaler Frequenzen bzw. vertikaler Übergänge als Bewegung vermieden wird.

Ein weiterer Vorteil der Erfindung besteht darin, daß wegen der vollbildweisen Umschaltung zwischen den Flimmerreduktionsverfahren eine einfache Umschaltung des Wiedergaberasters möglich ist.

Ein weiterer Vorteil der Erfindung besteht darin, daß beim Vorliegen von Bildmaterial aus einer Filmabtastung dies sicher erkannt wird und eine Darstellung in der großflächen- und zeilenflimmerfreien Betriebsart durchgeführt wird.

Weitere Vorteile der Erfindung ergeben sich aus der beispielhaften Erläuterung der Erfindung anhand der Figuren.

Es zeigt:

Figur 1    ein Blockschaltbild einer Vorrichtung zur Umsteuerung zwischen verschiedenen Flimmerreduktionsverfahren in einem Fernsehempfänger,

Figur 2    eine Skizze zur Erläuterung der Erzeugung der 100 Hz- Luminanzkomponente bei stehenden/langsam bewegten Bildinhalten und bei bewegten Bildinhalten,

Figur 3    ein Blockschaltbild eines Bewegungsdetektors nach der Erfindung.

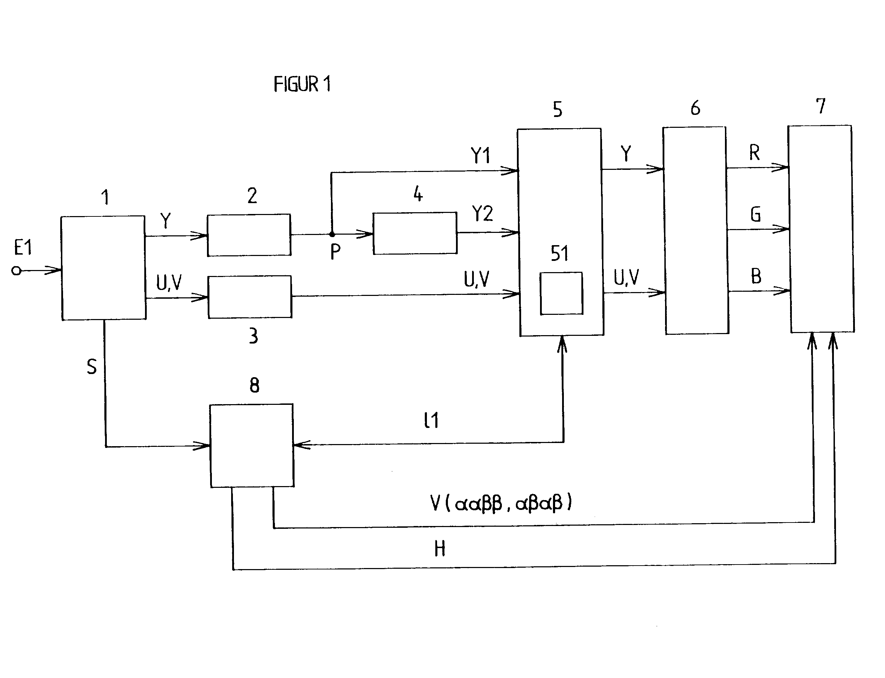

Die Figur 1 zeigt ein Blockschaltbild einer Vorrichtung zur Umsteuerung zwischen verschiedenen Flimmerreduktionsverfahren in einem Fernsehempfänger. Die gezeigte Vorrichtung weist auf: einen Farbdecoder 1, einen ersten Halbbildspeicher 2, einen zweiten Halbbildspeicher 3, einen dritten Halbbildspeicher 4, eine Signalverarbeitungsschaltung 5 mit einem Bewegungsdetektor 51, eine Matrixschaltung 6, einen Bildschirm 7 und eine Steuerschaltung 8.

Dem Eingang EI der gezeigten Vorrichtung wird ein Zeilensprung-FBAS-Signal zugeführt, welches eine Halbbild- bzw. Vertikalfrequenz von 50 Hz hat. Aus diesem Signal werden im Farbdecoder 1 die Komponentensignale Y, U, V und das Synchronsignal S gewonnen. Die Leuchtdichtekomponente Y wird mittels des Halbbildspeichers 2 in ein 100 Hz-Signal umgesetzt. Die im Zeitmultiplex vorliegenden Farbdifferenzsignale U und V werden mittels des Halbbildspeichers 3 in 100 Hz-Signale konvertiert.

Die am Ausgang des Halbbildspeichers 2 zur Verfügung stehende Leuchtdichtekomponente wird zum einen unverzögert und zum anderen über den Halbbildspeicher 4 verzögert der Signalverarbeitungsschaltung 5 zugeführt. Einem weiteren Eingang der Signalverarbeitungsschaltung 5 werden die vom Ausgang des Halbbildspeichers 3 abgeleiteten Farbdifferenzsignale U und V zugeleitet.

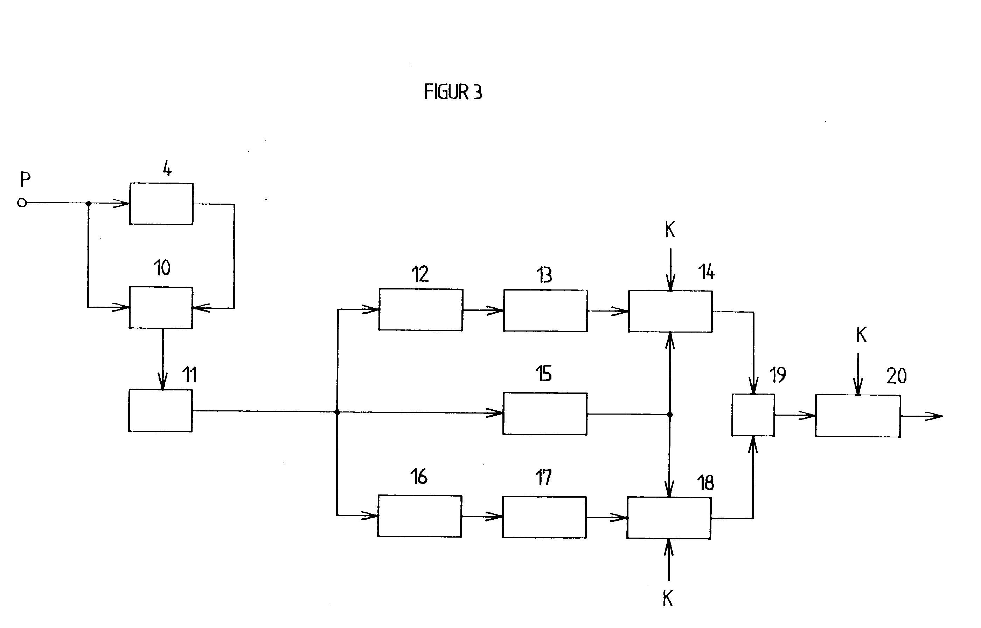

In der Signalverarbeitungsschaltung 5 werden die Komponentensignale in Abhängigkeit vom Ausgangssignal des Bewegungsdetektors 51, der im Zusammenhang mit der Figur 3 näher erläutert wird, derart verarbeitet, daß in einer ersten Betriebsart bei ruhenden und langsam bewegten Bildinhalten jeweils für die Dauer eines Vollbildes großflächenflimmerfreie und zeilenflimmerfreie 100 Hz-Komponentensignale und in einer zweiten Betriebsart bei schnell bewegten Bildinhalten ebenfalls für die Dauer eines Vollbildes großflächenflimmerfreie und bewegungsrichtige 100 Hz-Komponentensignale erzeugt werden.

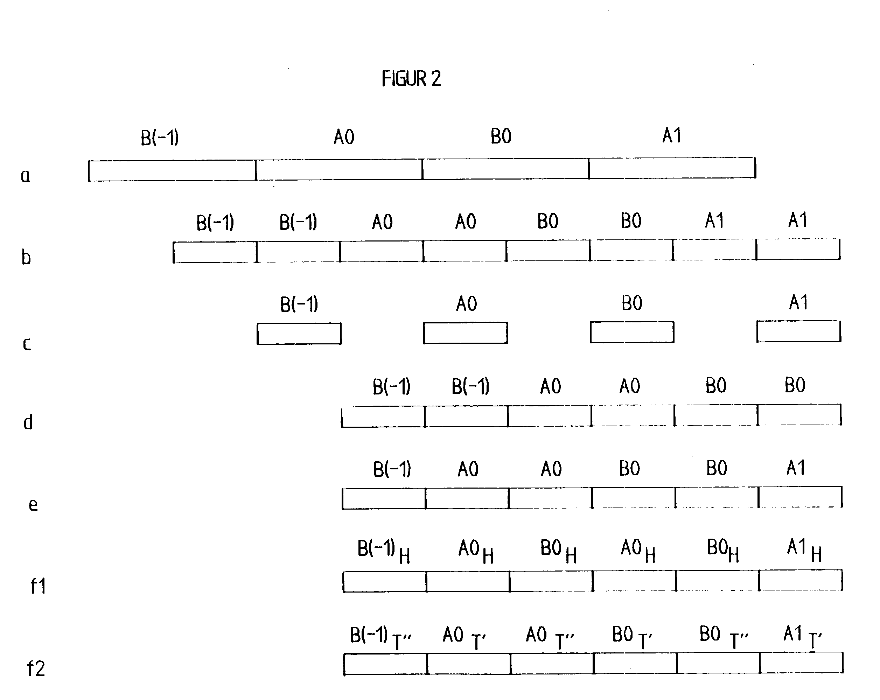

Die Erzeugung der 100 Hz- Luminanzkomponente wird im folgenden anhand der Figur 2 näher erläutert.

Die Figur 2a zeigt die aufeinanderfolgenden 50 Hz-Luminanzhalbbilder B(-1), A0, B0, A1, wie sie in den ersten Halbbildspeicher 2 eingeschrieben werden. In Figur 2b ist die 100 Hz-Halbbildfolge B(-1), B(-1), A0, A0, B0, B0, A1, A1 gezeigt, wie sie am Ausgang des ersten Halbbildspeichers 2 zur Verfügung steht. Aus Figur 2c ist die 100 Hz-Halbbildfolge B(-1), A0, B0, A1 ersichtlich, wie sie in den zweiten Halbbildspeicher 4 eingeschrieben wird. Aus Figur 2d geht die 100 Hz-Halbbildfolge B(-1), B(-1), A0, A0, B0, B0 hervor, die am Ausgang des zweiten Halbbildspeichers 4 zur Verfügung steht.

Die Figur 2e zeigt die bei Vorliegen von Bewegung verwendete großflächenflimmerfreie, bewegungsrichtige 100 Hz-Halbbildfolge B(-1), A0, A0, B0, B0, A1, wobei ersichtlich ist, daß die aufeinanderfolgenden 100 Hz-Halbbilder abwechselnd vom ersten und zweiten Halbbildspeicher 2 bzw. 4 zur Verfügung gestellt werden. Die Wiedergabe dieser Halbbildfolge erfolgt im $\alpha\alpha\beta\beta$-Raster. Der Vorteil dieser Darstellungsart besteht darin, daß an bewegten Kanten lediglich eine Doppelkontur entsteht, die für das menschliche Auge weit weniger störend ist als eine Zähnchenstruktur, wie sie bei einer Darstellung im $\alpha\beta\alpha\beta$ -Raster auftreten würde.

Die Figuren 2f1 und 2f2 zeigen die bei stehenden oder langsam bewegten Bildern verwendete großflächenflimmerfreie und zeilenflimmerfreie 100 Hz-Halbbildfolge. In Figur 2f1 ist dargestellt, daß die hohen vertikalen Ortsfrequenz-Signalanteile der Halbbilder in einer zeilenflimmerfreien 100 Hz-Halbbildfolge $B(-1)_H$, $A0_H$, $B0_H$, $A0_H$, $B0_H$, $A1_H$ wiedergegeben werden. Aus Figur 2f2 ist ersichtlich, daß die niedrigen vertikalen Ortsfrequenzsignalanteile der beiden Halbbilder in einer bewegungsrichtigen 100 Hz-Halbbildfolge mit zeitlicher Interpolation $B(-1)_{T''}$, $A0_{T'}$, $A0_{T''}$, $B0_{T'}$, $B0_{T''}$, $A1_{T'}$ wiedergegeben werden, wobei

$$B(-1)_{T''} = 0{,}25 \cdot A0_{Ti} + 0{,}75 \cdot B(-1)_T$$

$$A0_{T'} = 0{,}25 \cdot B(-1)_{Ti} + 0{,}75 \cdot A0_T$$

$$A0_{T''} = 0{,}75 \cdot A0_{Ti} + 0{,}25 \cdot B0_T$$

$$B0_{T'} = 0{,}75 \cdot B0_{Ti} + 0{,}25 \cdot A0_T$$

$$B0_{T''} = 0{,}25 \cdot A1_{Ti} + 0{,}75 \cdot B0_T$$

$$A1_{T'} = 0{,}25 \cdot B0_{Ti} + 0{,}75 \cdot A1_T.$$

Dabei handelt es sich bei $A0_{Ti}$, $B(-1)_{Ti}$, $B0_{Ti}$ und $A1_{Ti}$ um rasterinterpolierte Werte, d.h. um interpolierte Werte, die aus demselben Halbbild mittels vertikaler Interpolation abgeleitet werden. Die Wiedergabe der in den Figuren 2f1 und 2f2 gezeigten 100 Hz-Halbbildfolgen erfolgt im $\alpha\beta\alpha\beta$ -Raster.

Durch die beschriebene Wiedergabe der vertikalen Höhensignale in der beschriebenen zeilenflimmerfreien 100 Hz-Halbbildwiedergabefolge wird insgesamt eine zeilenflimmerfreie Bildwiedergabe erreicht, da die für das Zeilenflimmern weitgehend verantwortlichen vertikalen Höhensignale dem menschlichen Auge annähernd in der Flimmerqualität eines progressiv wiedergegebenen Vollbildes angeboten werden.

Die Farbdifferenzkomponenten U und V werden am Ausgang des Halbbildspeichers 3 in der Halbbildfolge AABB zur Verfügung gestellt und in der Signalverarbeitungsschaltung 5 lediglich einer Verzögerung unterworfen, die der Gesamtverzögerung der Luminanzkomponente entspricht, so daß die Komponentensignale Y, U, V am Ausgang der Signalverarbeitungsschaltung 5 zeitrichtig zur Verfügung stehen.

Die zur Bildschirmdarstellung notwendigen 100 Hz-Synchronsignale werden in der Steuerschaltung 8 aus den vom Farbdecoder 1 zur Verfügung gestellten 50 Hz-Synchronsignalen abgeleitet. Dazu wird in der Steuerschaltung 8 weiterhin - da bei Bedarf auch eine Rasterumschaltung von $\alpha\alpha\beta\beta$ nach $\alpha\beta\alpha\beta$ oder umgekehrt vorgenommen werden muß - durch Auswertung der 50 Hz-Synchronsignale der Beginn eines neuen Vollbildes ermittelt und ein daraus abgeleitetes Kennsignal K bei der Erzeugung der 100 Hz-Synchronsignale verwendet. Weiterhin benötigt die Steuerschaltung 8 zur Erzeugung der 100 Hz-Synchronsignale eine Information darüber, ob ein Vollbild einen stehenden oder langsam bewegten Bildinhalt hat oder ob es zu einer schnell bewegten Bildszene gehört. Diese Information wird im Bewegungsdetektor 51 ermittelt und der Steuerschaltung 8 über die Verbindung l1 zugeführt. Dem Bewegungsdetektor 51 wird unter anderem auch das genannte Kennsignal K für den Beginn eines neuen Vollbildes über die Verbindung l1 zugeführt.

Die Figur 3 zeigt ein Blockschaltbild des Bewegungsdetektors 51, welcher mit Ausnahme des Halbbildspeichers 4 Bestandteil der Signalverarbeitungsschaltung 5 ist. Der Bewegungsdetektor weist neben dem Halbbildspeicher 4 folgende Bestandteile auf: eine Subtraktionsschaltung 10, ein horizontales Tiefpaßfilter 11, einen ersten Signalweg mit einer Betragsbildungsschaltung 12, einer Schwellwertschaltung 13 und einer Schaltung 14 zur blockweisen Signalauswertung, eine Vorzeichengewinnungsschaltung 15, einen zweiten, parallel zum ersten Signalweg angeordneten Signalweg mit einer Betragsbildungsschaltung 16, einer Schwellwertschaltung 17 und einer Schaltung 18 zur blockweisen Signalauswertung, ein Oder-Gatter 19 und eine Auswerteschaltung 20. Am Ausgang der Auswerteschaltung 20 steht pro Vollbild ein Bit zur Verfügung, welches das Vollbild als stehendes oder langsam bewegtes Bild bzw. als schnell bewegtes Bild kennzeichnet.

In der Subtraktionsschaltung 10 wird der Amplitudenwert eines Bildpunktes eines Halbbildes vom Amplitudenwert des entsprechenden Bildpunktes des vorhergehenden Halbbildes subtrahiert. In vorteilhafter Weise handelt es sich bei einem dieser Halbbilder um ein rasterinterpoliertes Halbbild. Der erhaltene Differenzwert wird dem planaren bzw. horizontalen Tiefpaßfilter 11 zugeführt, welches unter anderem zur Unterdrückung unerwünschter Farbträgerreste vorgesehen ist. Vom Ausgang des horizontalen Tiefpaßfilters 11 gelangt das Signal an den Eingang der Betragsbildungsschaltung 12 des ersten Signalweges, der Vorzeichengewinnungsschaltung 15 und der Betragsbildungsschaltung 16 des zweiten Signalweges. An dem Ausgang der Betragsbildungsschaltung 12 ist die Schwellwertschaltung 13 und die Schaltung 14 zur blockweisen Signalauswertung angeschlossen. Die Ausgangssignale der Betragsbildungsschaltung 16 werden der Schwellwertschaltung 17 zugeführt, die ausgangsseitig mit der Schaltung 18 zur blockweisen Signalauswertung verbunden ist.

Die Schwellenwerte der Schwellwertschaltungen 13 und 17 und die Größe der Signalblöcke, die in den Schaltungen 14 und 18 ausgewertet werden, sind unterschiedlich und können in ihrer Empfindlichkeit auf Bewegungen, jeweils in horizontaler und vertikaler Richtung, den Eigenschaften der verwendeten Flimmerreduktionsverfahren angepaßt werden. Beispielsweise wird im ersten Signalweg mit der Schwellwertschaltung 13 und der Schaltung 14 die Schwelle groß und die Blockgröße klein gewählt. Dadurch kann auf bewegte Objekte, die einen großen Helligkeitsunterschied zu ihrem Hintergrund haben, was schon bei vergleichsweise geringen Bewegungen zu Artefakten bei der Bildwiedergabe führen würde, durch eine frühere Modusumschaltung reagiert werden. Beispielsweise wird die Blockgröße im ersten Signalweg so gewählt, daß jeweils 5 Bildpunkte in horizontaler Richtung und 2 Bildpunkte (bzw. Zeilen) in vertikaler Richtung erfaßt sind. Im zweiten Signalweg mit der Schwellwertschaltung 17 und der Schaltung 18 hat die Schwelle einen kleineren Wert und die Blockgröße wird so gewählt, daß ein Block 5 Bildpunkte in horizontaler Richtung und 6 Bildpunkte in vertikaler Richtung aufweist.

Um zu erkennen, ob für ein Vollbild der Zustand stehend oder langsam bewegt bzw. schnell bewegt angezeigt werden muß, werden die beschriebenen Blöcke bildpunktweise über ein Halbbild geschoben und für jeden Bildpunkt durch Zählung der gesetzten Bewegungsbits innerhalb eines Blockes unter zusätzlicher Berücksichtigung der am Ausgang der Vorzeichengewinnungsschaltung 15 zur Verfügung stehenden Vorzeichenbits entschieden, ob für diesen Bildpunkt der Zustand 0 (stehend oder langsam bewegt) oder der Zustand 1 (schnell bewegt) signalisiert werden soll. Beispielsweise wird auf das Vorliegen einer schnellen Bewegung entschieden, wenn alle Bewegungsbits innerhalb eines Blockes gesetzt sind und alle Vorzeichen gleich sind. Die genannten Zustandssignale 0 und 1 werden vom Ausgang der Schaltungen 14 und 18 dem Oder-Gatter 19 zugeführt und von dort aus an die Auswerteschaltung 20 weitergeleitet.

In der Auswerteschaltung 20 wird mittels eines Zählers die Anzahl der 1-Zustände für die Dauer eines Halbbildes gezählt. Ist die Anzahl dieser 1-Zustände größer als ein vorgegebener Schwellenwert, dann wird für das vorliegende Vollbild der Zustand "schnell bewegt" signalisiert. Ist die Anzahl der 1-Zustände hingegen kleiner als der vorgegebene Schwellenwert, dann wird das vorliegende Vollbild als "stehend bzw. langsam bewegt" markiert.

Die Auswertung der Vorzeichen der Differenzsignale bei der Bewegungsdetektion hat den Vorteil, daß nicht irrtümlicherweise hohe vertikale Frequenzen als Bewegung interpretiert werden können.

Um die Auswertesicherheit weiter zu erhöhen, erfolgt nicht nur ein Vergleich zwischen den Bildpunkten der beiden Halbbilder eines Vollbildes, sondern zusätzlich ein Vergleich zwischen den Bildpunkten aus aufeinanderfolgenden Halbbildern aufeinanderfolgender Vollbilder. Handelt es sich bei dem vorliegenden Bildmaterial beispielsweise um eine Filmabtastung, dann ist die Anzahl der 1-Zustände, die aus dem Vergleich zwischen Bildpunkten aus aufeinanderfolgenden Vollbildern abgeleitet werden, im allgemeinen wesentlich größer als die Anzahl der 1-Zustände, die aus einem Vergleich zwischen Bildpunkten aus unterschiedlichen Halbbildern desselben Vollbildes abgeleitet werden. Liegt eine Filmabtastung vor, dann erfolgt eine Wiedergabe in der großflächen- und zeilenflimmerfreien Betriebsart.

Aus den vorstehenden Ausführungen geht hervor, daß mittels des beschriebenen Bewegungsdetektors für jedes Vollbild entweder der Zustand "stehend/langsam bewegt" oder der Zustand "schnell bewegt" signalisiert wird. Um jedoch ein unerwünscht schnelles Hin- und Herschalten zwischen den beschriebenen Betriebsarten zu vermeiden, welches vom menschlichen Auge als unangenehm empfunden würde, wird nach einer bevorzugten Ausführungsform der Erfindung die momentan eingestellte Betriebsart solange beibehalten, bis eine ununterbrochene Folge von mehreren Vollbildern auf geänderte Bewegungsverhältnisse hinweist. Dies ist insbesondere von Vorteil bei einem Übergang von "schnell bewegt" nach "stehend/langsam bewegt", da es unerwünscht ist, wenn bereits ein kurzzeitiges Fehlen von Bewegung zu einer Betriebsartumschaltung führt.

Zusätzlich kann in vorteilhafter Weise eine weitere Hysteresewirkung dadurch erreicht werden, daß nach einer Umschaltung zwischen den beiden Betriebsarten die Parameter der Schwellwertschaltungen 13, 17 und/oder der Schaltungen 14, 18 zur blockweisen Auswertung und/oder der Auswerteschaltung 20 verändert werden, um zu häufiges Hin- und Herschalten zwischen den beiden Betriebsarten zu vermeiden.

## Patentansprüche

1. Bewegungsdetektor mit

- einer Vergleichsschaltung (4, 10, 11) zum bildpunktweisen Vergleich der Bildpunkte eines Luminanz-Halbbildes mit denen des vorherigen Luminanz-Halbbildes, welche an ihrem Ausgang für jeden Bildpunkt ein Differenzsignal zur Verfügung stellt,

- mit einer der Vergleichsschaltung (4, 10, 11) nachgeschalteten Betragsbildungsschaltung (12, 16) und

- mit einer der Betragsbildungsschaltung (12, 16) nachgeschalteten Schwellwertschaltung (13, 17), an deren Ausgang für jeden Bildpunkt ein Bewegungsbit vorliegt, welches einer Schaltung (14, 15) zur blockweisen Auswertung der Differenzsignale unter Berücksichtigung der Vorzeichen der Differenzsignale zugeführt wird,

**dadurch gekennzeichnet,**
daß der Bewegungsdetektor eine Parallelschaltung (12,13,14; 16,17,18) mehrerer Signalwege aufweist, die jeweils eine Betragsbildungsschaltung (12, 16), eine Schwellwertschaltung (13, 17) und eine Schaltung (14, 18) zur blockweisen Auswertung der Differenzsignale aufweisen, wobei sowohl die Schwellen der Schwellwertschaltungen (13, 17) als auch die in den Schaltungen (14, 18) zur blockweisen Auswertung der Differenzsignale gewählten Blockgrößen in der Parallelschaltung (12,13,14; 16, 17, 18) der Signalwege jeweils unterschiedlich sind.

2. Bewegungsdetektor nach Anspruch 1,
**dadurch gekennzeichnet,** daß er ein planares bzw. horizontales Tiefpaßfilter (11) aufweist, mittels welchem eine Unterdrückung von Farbträgerresten in den Differenzsignalen erfolgt.

3. Bewegungsdetektor nach einem oder mehreren der vorhergehenden Ansprüche,
**dadurch gekennzeichnet,** daß er eine Auswerteschaltung (20) aufweist, die an den Ausgang der Schaltungen (14, 18) zur blockweisen Auswertung der Differenzsignale angeschlossen ist, und an ihrem Ausgang ein Bewegungsbit pro Vollbild zur Verfügung stellt.

4. Bewegungsdetektor nach Anspruch 3,
**dadurch gekennzeichnet,** daß die Auswerteschaltung (20) eine Zählschaltung zur Zählung der eine Bewegung anzeigenden Blöcke aufweist.

5. Bewegungsdetektor nach Anspruch 4,
**dadurch gekennzeichnet,** daß die Zählschaltung die Anzahl derjenigen eine Bewegung anzeigenden Blöcke zählt, die sich aus dem Vergleich von Halbbildern desselben Vollbildes ergeben.

**6.** Bewegungsdetektor nach Anspruch 5,
**dadurch gekennzeichnet,** daß die Auswerteschaltung weiterhin Zählmittel enthält, die die Anzahl derjenigen eine Bewegung anzeigenden Blöcke zählt, die sich aus dem Vergleich von Halbbildern aus aufeinanderfolgenden Vollbildern ergeben, so daß eine sichere Erkennung von Bildmaterial erfolgt, welches aus einer Filmabtastung abgeleitet ist.

**7.** Bewegungsdetektor nach einem oder mehreren der vorhergehenden Ansprüche,
**dadurch gekennzeichnet,**
daß der Bewegungsdetektor in einer Vorrichtung zur Umsteuerung zwischen verschiedenen Flimmerreduktionsverfahren verwendet wird, welche aufweist:

- Bildspeichermittel (2, 3), in die die zu verarbeitenden Fernsehsignale mit einer ersten Vertikalfrequenz eingeschrieben und mit einer zweiten, höheren Vertikalfrequenz ausgelesen werden und

- eine Fernsehsignalverarbeitungsschaltung (5), die in Ansprache auf das Ausgangssignal des Bewegungsdetektors in einer ersten Betriebsart bei ruhenden und langsam bewegten Bildinhalten ein großflächen- und zeilenflimmerfreies erstes Zeilensprungsignal mit der zweiten Vertikalfrequenz und in einer zweiten Betriebsart bei schnell bewegten Bildinhalten ein bewegungsrichtiges, großflächenflimmerfreies zweites Zeilensprungsignal mit der zweiten Vertikalfrequenz zur Verfügung stellt, wobei das bewegungsrichtige, großflächenflimmerfreie zweite Zeilensprungsignal mit der zweiten Vertikalfrequenz aus einem Zeilensprungsignal mit der ersten Vertikalfrequenz durch eine Halbbildwiederholung abgeleitet ist.

**8.** Bewegungsdetektor nach Anspruch 7,
**dadurch gekennzeichnet,** daß er ein Umsteuersignal zur Umschaltung zwischen einer Wiedergabe eines bewegungsrichtigen Zeilensprungsignals mit der zweiten Vertikalfrequenz und einer Wiedergabe eines zeilenflimmerfreien Zeilensprungsignals mit der zweiten Vertikal frequenz erst dann erzeugt, wenn mehrere aufeinanderfolgende Vollbilder als ruhend oder langsam bewegt erkannt werden.

**9.** Bewegungsdetektor nach einem der Ansprüche 7 oder 8,
**dadurch gekennzeichnet,** daß nach einer Betriebsartumschaltung die Parameter der Schwellwertschaltung (13, 17) und/oder der Schaltung zur blockweisen Auswertung (14, 18) und/oder der Auswerteschaltung (20) im Sinne einer Beibehaltung der momentanen Betriebsart verändert werden.

## Claims

**1.** Movement detector, having

- a comparator circuit (4, 10, 11) for the pixel-by-pixel comparison of the pixels of a luminance field with those of the previous luminance field, which comparator circuit makes available a differential signal for every pixel at its output,
- a modulus-forming circuit (12, 16) connected downstream of the comparator circuit (4, 10, 11) and
- a threshold-value circuit (13, 17) which is connected downstream of the modulus-forming circuit (12, 16) and at whose output there is present for every pixel a movement bit which is fed to a circuit (14, 15) for the block-by-block evaluation of the differential signals taking account of the sign of the differential signals,

characterized in that the movement detector has a parallel circuit (12, 13, 14; 16, 17, 18) of a plurality of signal paths which each has a modulus-forming circuit (12, 16), a threshold-value circuit (13, 17) and a circuit (14, 18) for the block-by-block evaluation of the differential signals, both the thresholds of the threshold-value circuits (13, 17) and the block sizes chosen in the circuits (14, 18) for the block-by-block evaluation of the differential signals being different in each case in the parallel circuit (12, 13, 14; 16, 17, 18) of the signal paths.

**2.** Movement detector according to Claim 1, characterized in that it has a planar or horizontal low-pass filter (11) which suppresses colour subcarrier residues in the differential signals.

**3.** Movement detector according to one or more of the preceding claims, characterized in that it has an evaluation circuit (20) which is connected to the output of the circuits (14, 18) for the block-by-block evaluation of the differential signals and makes available at its output a movement bit for each frame.

**4.** Movement detector according to Claim 3, characterized in that the evaluation circuit (20) has a counting circuit for counting the blocks indicating a movement.

**5.** Movement detector according to Claim 4, characterized in that the counting circuit counts the number of those blocks indicating a movement which result from the comparison of fields of the same frame.

**6.** Movement detector according to Claim 5, characterized in that the evaluation circuit contains, in addition, counting means which count the number of those blocks indicating a movement which result from the comparison of fields of consecutive frames so that picture material which is derived from film scanning is reliably detected.

**7.** Movement detector according to one or more of the preceding claims, characterized in that the movement detector is used in a device for switching over between different flicker-reduction methods, which device has

- picture storage means (2, 3) into which the television signals to be processed are written in with a first vertical frequency and are read out with a second, higher vertical frequency and
- a television signal processing circuit (5) which, in response to the output signal of the movement detector, makes available, in a first operating mode for stationary and slowly moving picture contents, a large-area flicker-free and line flicker-free first interlaced signal at the second vertical frequency and, in a second operating mode for rapidly moving picture contents, makes available a motionally correct, large-area flicker-free second interlaced signal at the second vertical frequency, the motionally correct, large-area flicker-free second interlaced signal having the second vertical frequency being derived from an interlaced signal having a first vertical frequency by field repetition.

**8.** Movement detector according to Claim 7, characterized in that it generates a switchover signal for switching over between reproduction of a motionally correct interlaced signal having the second vertical frequency and reproduction of a line flicker-free interlaced signal having the second vertical frequency only if a plurality of consecutive frames are detected as stationary or slowly moving.

**9.** Movement detector according to one of Claims 7 or 8, characterized in that, after an operating-mode switchover, the parameters of the threshold-value circuit (13, 17) and/or the circuit for the block-by-block evaluation (14, 18) and/or the evaluation circuit (20) are altered with a view to maintaining the current operating mode.

**Revendications**

**1.** Détecteur de déplacement comportant

- un circuit comparateur (4,10,11) pour comparer un par un les points d'image d'une trame de luminance à ceux de la trame de luminance précédente, et qui délivre à sa sortie un signal de différence pour chaque point d'image,
- un circuit (12,16) de formation de valeur absolue, qui est branché en aval du circuit comparateur (4,10,11), et
- un circuit à valeur de seuil (13,17), qui est branché en aval du circuit (12,16) de formation de valeur absolue et à la sortie duquel est présent, pour chaque point d'image, un bit de déplacement, qui est envoyé à un circuit (14,15) servant à évaluer bloc par bloc les signaux de différence en tenant compte des signes des signaux de différence,

caractérisé en ce
que le détecteur de déplacement comporte un circuit parallèle (12,13,14; 16,17,18) de plusieurs voies de transmission de signaux, qui possèdent chacune un circuit (12,16) de formation de valeur absolue, un circuit à valeur de seuil (13,17) et un circuit (14,18) servant à évaluer bloc par bloc les signaux de différence, et dans lequel aussi bien les seuils des circuits à valeurs de seuil (13,17) que les tailles de blocs, sélectionnées dans les circuits (14,18) d'évaluation bloc par bloc des signaux de différence, dans le circuit parallèle (12,13,14; 16,17,18) des voies de transmission de signaux sont respectivement différents.

**2.** Détecteur de déplacement selon la revendication 1, caractérisé en ce qu'il comporte un filtre passe-bas plat ou horizontal (11), avec lequel est réalisée une suppression de restes de la porteuse couleur dans les signaux de différence.

**3.** Détecteur de déplacement selon une ou plusieurs des revendications précédentes, caractérisé en ce qu'il comporte un circuit d'exploitation (20), qui est raccordé à la sortie des circuits (14,18) pour réaliser l'exploitation bloc par bloc des signaux de différence, délivre à sa sortie un bit de déplacement pour chaque image complète.

**4.** Détecteur de déplacement selon la revendication 3, caractérisé en ce que le circuit d'évaluation (20) comporte un circuit de comptage servant à compter les blocs présentant un déplacement.

**5.** Détecteur de déplacement selon la revendication 4, caractérisé en ce que le circuit de comptage compte le nombre des blocs, qui présentent un déplacement et sont obtenus à partir de la comparaison de trames de la même image complète.

**6.** Détecteur de déplacement selon la revendication 5, caractérisé en ce que le circuit de déplacement contient en outre des moyens de comptage, qui comptent le nombre des blocs présentant un déplacement et qui sont obtenus à partir de la comparaison de trames tirées d'images complètes successives, de sorte qu'il se produit une identification sûre du matériau d'image, qui est obtenue à partir d'une exploration par balayage d'un film.

7. Détecteur de déplacement selon une ou plusieurs des revendications précédentes,
caractérisé en ce
que le détecteur de déplacement est utilisé dans un dispositif pour réaliser une inversion de commande entre différents procédés de réduction du papillotement et qui comprend :

- des moyens formant mémoire d'image (2,3), dans lesquels les signaux vidéo devant être traités sont inscrits avec une première fréquence verticale et sont lus avec une seconde fréquence verticale plus élevée,
- un circuit (5) de traitement des signaux de télévision, qui, en réponse au signal de sortie du détecteur de déplacement, délivre dans un premier type de fonctionnement, pour des contenus d'images fixes et à déplacement lent, un premier signal de saut de ligne, qui ne présente aucun papillotement une surface étendue ni sur une ligne, avec la deuxième fréquence verticale et, dans un deuxième type de fonctionnement, pour des contenus d'images à déplacement rapide, un deuxième signal de saut de ligne correct du point de vue déplacement et ne présentant aucun papillotement sur une surface étendue, le deuxième signal de saut de ligne, correct du point de vue déplacement et exempt d'un papillotement sur une surface étendue, et possédant la seconde fréquence verticale étant obtenu à partir d'un signal de saut de ligne possédant la première fréquence verticale, au moyen d'une répétition de trames.

8. Détecteur de déplacement selon la revendication 7, caractérisé en ce qu'il produit un signal d'inversion de commande pour réaliser la commutation entre une reproduction d'un signal de saut de ligne correct du point de vue déplacement et présentant la seconde fréquence verticale et une reproduction d'un signal de saut de ligne ne comportant aucun papillotement de ligne et possédant la seconde fréquence verticale, uniquement lorsque plusieurs images complètes successives sont identifiées comme étant arrêtées ou se déplaçant lentement.

9. Détecteur de déplacement selon l'une des revendications 7 ou 8, caractérisé en ce qu'après une commutation du type de fonctionnement les paramètres du circuit à valeur de seuil (13,17) et/ou du circuit servant à réaliser l'évaluation bloc par bloc (14,18) et/ou le circuit d'exploitation (20) sont modifiés dans le sens du maintien du type de fonctionnement instantané.

FIGUR 1

EP 0 639 922 B1

FIGUR 2

EP 0 639 922 B1

a  
B(-1)  A0  B0  A1

b  
B(-1)  B(-1)  A0  A0  B0  B0  A1  A1

c  
B(-1)  A0  B0  A1

d  
B(-1)  B(-1)  A0  A0  B0  B0

e  
B(-1)  A0  A0  B0  B0  A1

f1  
B(-1)$_H$  A0$_H$  B0$_H$  A0$_H$  B0$_H$  A1$_H$

f2  
B(-1)$_{T''}$  A0$_{T'}$  A0$_{T''}$  B0$_{T'}$  B0$_{T''}$  A1$_{T'}$

FIGUR 3